# EUROPÄISCHE PATENTSCHRIFT

(11) **EP 4 066 229 B1**
(45) Veröffentlichungstag und Bekanntmachung des Hinweises auf die Patenterteilung: **31.12.2025**
(21) Anmeldenummer: 20808336.0
(22) Anmeldetag: 17.11.2020
(51) Int. Cl.: G09B 9/06

(54) **VERFAHREN ZUM TRAINING EINER SCHIFFSBESATZUNG AUF EINEM SCHIFF**
METHOD FOR TRAINING A SHIP'S CREW ON A SHIP
PROCÉDÉ D'ENTRAÎNEMENT DE L'ÉQUIPAGE D'UN NAVIRE SUR UN NAVIRE

(30) Priorität: 25.11.2019 DE 102019218110
(43) Veröffentlichungstag der Anmeldung: 05.10.2022
(73) Patentinhaber: TKMS GmbH, 24143 Kiel (DE); thyssenkrupp AG, 45143 Essen (DE)
(72) Erfinder: VON PLANTA, Philipp, 20251 Hamburg (DE)
(74) Vertreter: thyssenkrupp Intellectual Property GmbH
(86) Internationale Anmeldenummer: PCT/EP2020/082320
(87) Internationale Veröffentlichungsnummer: WO 2021/104923

(56) Entgegenhaltungen:
- DE-A1- 102017 112 634
- US-A1- 2018 314 484
- US-B1- 9 088 787
- NOH SEUNG-TAK ET AL: "An HMD-based Mixed Reality System for Avatar-Mediated Remote Collaboration with Bare-hand Interaction", 1 January 2015 (2015-01-01), pages 61 - 66, XP055778583, Retrieved from the Internet <URL:https://diglib.eg.org/handle/10.2312/egve20151311> [retrieved on 20210222], DOI: 10.2312/egve.20151311
- DRAGOS DATCU ET AL: "Virtual co-location to support remote assistance for inflight maintenance in ground training for space missions", COMPUTER SYSTEMS AND TECHNOLOGIES, ACM, 2 PENN PLAZA, SUITE 701 NEW YORK NY 10121-0701 USA, 27 June 2014 (2014-06-27), pages 134 - 141, XP058058979, ISBN: 978-1-4503-2753-4, DOI: 10.1145/2659532.2659647

## Beschreibung

Die Erfindung betrifft die Kombination des Trainings von Personen auf einem Schiff gleichzeitig und zusammen mit Personen, die an einem anderen Ort in einem virtuellen Schiff gemeinsam mit den Personen an Bord des Schiffes trainieren.

In der heutigen Situation ist gerade bei militärischen Schiffe die feste Beziehung zwischen Besatzung und Schiff, wie diese früher praktiziert wurde, nicht mehr gegeben. Vielmehr müssen Besatzungen auf verschiedenen Schiffen der gleichen Klasse oder auch eines gleichen Typs eingesetzt werden. Da es aber auch bei Schiffen, welche zur gleichen Klasse gehören, Unterscheide kommt, besteht hier eine Notwendigkeit zum Training.

Darüber hinaus müssen die Besatzungen auch ortsflexibel gewechselt werden. Wird ein Schiff beispielsweise vor dem Horn von Afrika eingesetzt, so wäre es ungünstig, zunächst mit dem Schiff zurück nach Deutschland zu fahren, dort die Besatzung zu wechseln um dann wieder zurückzufahren.

Es besteht somit ein Bedarf, ortsunabhängig Besetzungen zu schulen und somit der Einsatzflexibilität Rechnung zu tragen.

Aus der US 2002/0010734 A1 ist ein ein System einer erweiterten Realität mit eine lokalen und einer oder mehreren entfernten Stationen bekannt.

Aus der US 2018/0359448 A1 ist eine gemeinschaftliche Interaktion mehrerer Parteien in einer rituellen Realitätsumgebung bekannt.

Aus der DE 10 2017 208 866 A1 ist eine landbasierte Trainingseinrichtung für eine Unterseebootbesatzung bekannt.

Drago Datcuet al: "Virtual co-location to support remote assistance for inflight maintenance in ground training for space missions" offenbart ein System zum Trainieren einer Astronautenmannschaft auf Basis von augmentierter Realität (XP055778583).

Aufgabe der Erfindung ist es, ein Verfahren bereits zu stellen, mit dem eine derartig flexible Schulung von Schiffsbesatzungen möglich ist.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren zum Training einer Schiffsbesatzung verwendet zum Training zum Ersten das reale Schiff, wobei die Schiffsbesatzung auf die Verwendung genau dieses Schiffes für den realen Einsatz trainiert werden soll, und zum Zweiten einen Simulator. Wesentlich ist somit, dass als erste Trainingsumgebung das reale Schiff und nicht nur ein Simulator verwendet wird. Dieses hat zwei wesentliche Gründe. Zum Ersten ist es so möglich, Trainings durchzuführen, während das Schiff im Einsatz ist. Dieses kann beispielsweise vorteilhaft sein, wenn einzelne oder wenige Besatzungsmitglieder neu eingetroffen sind und diese dann nicht von der Schiffsbesatzung vor Ort eingewiesen werden müssen, sondern durch weitere Personen über dieses Verfahren trainiert werden können. Zum Zweiten kann ein Training für eine zu erwartende und bisher nicht geübte Situation durchgeführt werden. Muss beispielsweise eine ungewöhnliche Reparatur durchgeführt werden, so kann diese so zunächst mit Unterstützung von Land trainiert werden, bevor tatsächlich in die Schiffssysteme eingegriffen wird. Ebenso können missionsspezifische Vorgänge geübt werden, wenn diese vorher nicht zu erwarten waren uns somit für die Besatzung neu sein können. Eskaliert beispielsweise die taktische Situation während einer an sich friedlichen Mission können so kurzfristig und vorsichtshalber entsprechende Situationen, Prozesse oder Abläufe direkt an Bord trainiert werden. Der Simulator dient dazu, ein virtuelles Abbild des Schiffes in einer virtuellen Realität zu erstellen und dessen Verhalten zu simulieren. Hierdurch verhält sich das virtuelle Schiff in der virtuellen Realität (im Idealfall) genauso wie das reale Schiff in einer identischen Situation sich verhalten würde. Das Training einer Schiffsbesatzung dient dazu, dass die Personen der Schiffsbesatzung den Umgang mit dem Schiff beziehungsweise mit den Einrichtungen des Schiffes erlernen beziehungsweise durch praktische Erfahrung Routine und dadurch Sicherheit und Geschwindigkeit gewinnen, Hierbei kann das Training auf einzelne Personen oder kleine Gruppen beschränkt sein, wenn beispielsweise nur eine Person oder nur ein kleiner Teil der Schiffsbesatzung ausgetauscht werden soll. Ebenso wird das Training üblicherweise für jede Person auf den Bereich beschränkt, in dem diese Person im Regelfall und gegebenenfalls in einem Notfall tätig sein wird. Der Simulator ist zur Erzeugung einer virtuellen Realität des verwendeten Schiffes ausgebildet. Das bedeutet, dass in der virtuellen Realität exakt die gleiche Trainingsumgebung besteht, wie diese vor Ort auf dem Schiff besteht. Zwar ist natürlich ein Unterschied zwischen einer realen Existenz und einer virtuellen Umgebung gegeben, die exakte Übereinstimmung bezieht sich aber auf die technischen Besonderheiten des Schiffes. Türen und Gänge befinden sich an den gleichen Stellen, ebenso Computerkonsolen, Schalter, Hebel oder andere Bedienelemente. Dieses ist sehr wichtig, da gerade auch das schnelle Auffinden gewisser Vorrichtungen ein Teil des Trainings ist, um im Notfall die notwendigen Handlungen ohne Zeitverlust, beispielsweise durch Suchen, vornehmen zu können. Hierbei ist zu beachten, dass scheinbar baugleiche Schiffe einer identischen Schiffsklasse, auch innerhalb eines Loses, durchaus deutliche Abweichungen voneinander aufweisen können. Daher ist die Wiedergabe exakt dieses Schiffes in der virtuellen Realität wichtig für den Trainingserfolg.

Das Schiff befindet sich an einem ersten Ort und der Simulator befindet sich an einem zweiten Ort, wobei der erste Ort von dem zweiten Ort verschieden ist. Beispielsweise befindet sich der Simulator im Heimathafen der Flotte, während sich das Schiff an einem beliebigen Hafen auf der Welt befindet. Bevorzugt befindet sich das Schiff während der Durchführung des Verfahrens fest vertäut in einem Hafen. Das Schiff kann aber auch auf See sein, wenn beispielsweise ein Maschinenschaden eine komplexe Reparatur unumgänglich macht, die auf diese Weise vorher trainiert werden soll. Hier können am einfachsten die Systeme auf Training umgestellt werden und es sind keine Handlungen durchzuführen, um das Schiff zu führen. Natürlich kann ein Training durchgeführt werden, wenn das Schiff auf See ist. Insbesondere kann das Training dann durchgeführt werden, um beispielsweise ein Besatzungsmitglied vor einer akut notwendigen und nicht zum normalen Ausbildungsprogramm gehörenden Reparatur zu schulen, um diese anschließend durchzuführen.

Zwischen dem Simulator und dem Schiff besteht wenigstens eine erste datentechnische Übertragungsverbindung. Hierbei kann die erste datentechnische Übertragungsverbindung zwischen dem Simulator und dem Schiff selbst bestehen. Dieses ist bevorzugt, wenn auch die Schiffssysteme in einen Trainingsmodus geschaltet werden können und so Eingaben auch direkt in die Schiffs-EDV gemacht werden können, jedoch nur Auswirkungen in der virtuellen Welt entfalten. Es kann jedoch auch alternativ eine Verbindung zwischen dem Simulator und eine im Bereich des Schiffes angeordnete Datenverarbeitungsstation bestehen, wobei die Datenverarbeitungsstation dann eine drahtlose Verbindung wenigstens zur ersten Datenbrille aufweist. Da die erste Person mit der ersten Datenbrille sich im Schiff befindet, besteht dann eine datentechnische Verbindung zwischen Simulator und dem Schiff, da die erste Datenbrille innerhalb des Schiffes direkt mit dem Simulator Daten austauschen kann.

Wenigstens eine erste Person trainiert an Bord des Schiffes, also in der Umgebung des realen Schiffes auf dessen Benutzung die erste Person trainiert werden soll, und wenigstens eine zweite Person trainiert im Simulator. Hierbei kann das Training beispielsweise die normale Schiffsroutine betreffen, also beispielsweise übliche Wartungs- und Kontrollaufgaben umfassen. Es kann sich bei dem Training auch um das Training von Gefahrensituationen oder Gefahrenabwehr handeln, also beispielsweise dem Ausfall eines oder mehrerer Geräte, Wassereinbruch, Brand oder auch eine Gefechtssituation. Bei diesem Training sollen die teilnehmenden Personen die Handgriffe erlernen und eintrainieren, welche diese in einer analogen realen Situation dann erleichtert ausführen können. Diese Trennung erleichtert ein Training. Beispielsweise kann es sich bei der ersten Person um eine Person handeln, welcher aus der aktuellen und erfahrenen Schiffsbesatzung stammt, wohingegen die zweite Person eine Person aus der Schiffsbesatzung stammt, welche in Kürze das Schiff übernehmen soll und zunächst damit vertraut gemacht werden soll. Alternativ ist die erste Person ein Teil der Schiffsbesatzung, welche sich bereits an Bord des Schiffes befindet, beispielsweise um vorbereitende Handlungen oder Reparaturen vorzunehmen. Die zweite Person stammt aus einer Gruppe, die erst später an Bord des Schiffes benötigt wird und daher noch nicht dorthin versetzt wurde. Jedoch kann so die neue Schiffsbesatzung gemeinsam trainieren. In einem weiteren Szenario stammt die erste Person aus einer neuen, einzuarbeitenden Schiffsbesatzung und die zweite Person ist eine erfahrene Person, beispielsweise eine, welche diese Position früher auf diesem Schiff innehatte und daher mit den notwendigen Schritten und räumlichen Gegebenheiten vertraut ist.

Die erste Person verwendet eine erste Datenbrille. Bevorzugt dient die erste Datenbrille dazu in Form einer gemischten Realität der ersten Person eine Orientierung im Schiff zu ermöglichen und gleichzeitig die Informationen aus dem Simulator wahrzunehmen. Eine gemischte Realität ist die Überblendung der virtuellen Realität mit der sichtbaren Welt. Beispielsweise und insbesondere wird als erste Datenbrille eine Datenbrille ausgewählt, welche eine direkte Sicht auf die Umgebung ermöglicht und zusätzlich Elemente virtuell in die Umgebung einblendet. Beispielsweise werden dann virtuelle Bedienelemente und der Avatar der zweiten Person in die reale Umgebung des Schiffes über die erste Datenbrille projiziert. Im einfachsten Fall ermöglicht ein halbdurchlässiger Spiegel als Brille die Sicht auf die Umgebung und auf ein Display, welches die zusätzlichen Elemente der virtuellen Realität darstellt. Alternativ kann die Datenbrille auch eine Kamera aufweisen, die die Umgebung erfasst, in die Aufnahmebilder dann diese zusätzlichen Elemente hineinrechnet und das Gesamtbild dann der ersten Person darstellt.

Es besteht eine Datenverbindung zwischen der ersten Datenbrille und dem Simulator und Daten werden zwischen dem Simulator und der ersten Datenbrille ausgetauscht. Wie vorstehend erläutert wird die Datenverbindung über die erste datentechnische Übertragungsverbindung des Schiffs am ersten Ort mit dem Simulator am zweiten Ort hergestellt und Daten über diese Datenverbindung ausgetauscht. Diese Datenverbindung ist notwendig, um die Handlungen oder Eingaben der ersten Person (Betätigung von Elementen, Schaltern, Hebeln, ...) einzulesen und den Effekt in der virtuellen Realität zu simulieren, die Position der ersten Person zu erfassen, um dessen Avatar in der virtuellen Realität wiedergeben zu können und um Daten aus der virtuellen Realität, beispielsweise Anzeigen oder den Avatar der zweiten Person in die erste Datenbrille einblenden zu können.

Daten werden zwischen dem Simulator und der ersten Datenbrille derart ausgetauscht, dass der Simulator in der Lage ist die erste Person und die zweite Person in der virtuellen Realität der Simulation an ihrer jeweiligen Position wiedergegeben werden. Wesentlich ist, dass die erste Person Handlungen nicht an realen mechanischen Betätigungselementen des Schiffes vornimmt, sondern an virtuellen Betätigungselementen in der virtuellen Realität vornimmt. Würde die Person beispielsweise ein Flutventil im realen Schiff öffnen, beispielsweise um ein virtuelles Feuer in einem Raum zu ersticken, so würde Wasser in das reale Schiff eindringen. Statt das Flutventil des Schiffes zu öffnen, wird die erste Person ein virtuelles Flutventil virtuell öffnen, welches in der unmittelbaren Umgebung des realen Flutventils angezeigt wird, sodass die trainierte Handlung praktisch der realen Handlung, welche die trainierte Person im Ernstfall beherrschen sollte, gleicht. Der Simulator simuliert die Reaktionen des virtuellen Schiffes der virtuellen Realität auf die Handlungen der ersten Person und der zweiten Person und gibt die Ergebnisse in der virtuellen Realität wieder. Um am eben genannten Beispiel dieses zu verdeutlichen ist es für den Simulator gleich, ob die erste Person oder die zweite Person das virtuelle Flutventil öffnet. In beiden Fällen wird der gleiche Ergebnis simuliert. Öffnet beispielsweise die erste Person ein virtuelles Flutventil und schließt die zweite Person ein virtuelles Schott zu der Sektion, die durch das Öffnen geflutet wird, so ergibt sich aus der Summe der beiden Handlungen, dass in der Simulation der virtuellen Realität nur der Bereich bis zum nun geschlossenen Schott geflutet wird.

In einer bevorzugten Ausführungsform der Erfindung werden die Handlungen an den virtuellen Betätigungselementen jeweils an dem Ort vorgenommen, an dem auch das reale Betätigungselement im realen Schiff angeordnet ist. Von der Handhabung und von den Bewegungen im Schiff ergibt sich dadurch kein Unterschied zwischen der Betätigung eines virtuellen Betätigungselements im Training oder später des realen Betätigungselements im realen Einsatz.

In einer weiteren Ausführung der Erfindung verwendet die erste Person ein Betätigungselement der ersten Datenbrille für die simulierte Bedienhandlung. Hierdurch kann gewährleistet werden, dass keine echten Bedienhandlungen aus Versehen getätigt werden, was die Sicherheit auf dem Schiff erhöht.

In einer weiteren Ausführungsform der Erfindung handelt es sich bei dem Schiff um ein militärisches Schiff. Insbesondere ist das militärische Schiff ausgewählt aus der Gruppe umfassend Unterseeboot, Flugzeugträger, Hubschrauberträger, Kreuzer, Zerstörer, Fregatte, Korvette, Landungsschiffe, Minenleger, Minenräumfahrzeug, Minenjagdfahrzeug, Patrouillenboot, Schnellboot, Geleitboot, Luftkissenboot und Aufklärungsschiff. Besonders bevorzugt ist das militärische Schiff ausgewählt aus der Gruppe umfassend Unterseeboot, Kreuzer, Zerstörer, Fregatte, Korvette, Schnellboot und Geleitboot.

Erfindungsgemäß wird die Position der ersten Person im Schiff über die erste Datenbrille erfasst. Viele Datenbrillen weisen üblicherweise heute bereits Bewegungssensoren auf, über die eine Bewegung der ersten Datenbrille und damit der ersten Person verfolgt werden kann. Um dieses zu verbessern, kann die Position der ersten Person im Schiff über die erste Datenbrille ausgehend von einem Startpunkt erfasst werden. Beispielsweise kann eine Einstiegsluke, die Brücke oder der Aufenthaltsbereich der Besatzung als solcher Startpunkt gewählt werden. Die erste Person startet dazu die Simulation und wird aufgefordert eine bestimmte Position aufzusuchen. Sobald die erste Person diese Position erreicht hat, bestätigt sie dieses und die Simulation startet. Mittels der Bewegungssensoren in der ersten Datenbrille wird die Positionsänderung der ersten Person anschließend kontinuierlich erfasst über die Datenverbindung übertragen und in der Simulation dargestellt.

Da die Erfassung der Position durch einen Bewegungssensor einer Datenbrille jedoch keine hohe Genauigkeit aufweist, werden in einer weiteren Ausführungsform in einer Mixed Reality Umgebungen sogenannte Marker verwendet, mit denen das System nicht nur einen Startpunkt, sondern regelmäßige Punkte zur Kalibrierung hat. Dafür werden auf dem Schiff computerlesbare Markierungen, auch Marker genannt, angebracht und die Datenbrille weist eine Kamera oder andere optische Erfassungseinrichtung für die Umgebung auf, die die Markierungen aufnimmt. In der Datenbrille, einer mit der Datenbrille verbundenen Datenverarbeitungseinrichtung auf dem Schiff oder dem Simulator wird die Markierung erkannt und anhand hinterlegter Positionsdaten die Position der Markierung auf dem Schiff bestimmt. Durch die Bildauswertung, die Position der Markierung und dem Bewegungssensor in der Datenbrille wird die Position der ersten Person im Schiff bestimmt. In einem realen Schiff sind solche Marker unerwünscht, aufwändig in der Montage und Wartung. Es wird erfindungsgemäß die Position der ersten Person im Schiff über die erste Datenbrille durch einen Abgleich der von der ersten Datenbrille optisch erfassten Umgebung mit der virtuellen Realität erfasst, indem der Simulator ermittelt, aus welcher Position sich die optisch erfasste Umgebung ergibt. Da solche Trainings auf Schiffen eingesetzt werden, insbesondere militärischen Schiffen, die eben sich sehr durch Komplexität und Einmaligkeit auszeichnen, ist hier eine Zuordnung möglich. Beispielweise in einem Unterseeboot ist die Integrationsdichte der Komponenten extrem hoch, sodass es keine zwei Positionen gibt, aus denen sich der gleiche Blick ergibt, wenn sich die erste Person nicht gerade direkt vor eine Wand stellt. Selbst für ein Kreuzfahrtschiff mit hunderten identischen Kabinen würde sich dieses Verfahren anwenden lassen, da der Simulator beim Betreten der Kabine die Kabinennummer als Identifikationsmerkmal verwenden kann. Innerhalb des Raumes würde der Simulator sich dann entweder aus den optischen Daten oder aus dem Bewegungssensoren die exakte Position berechnen können.

In einer weiteren Ausführungsform der Erfindung gibt der Simulator nur einen Teil des verwendeten Schiffes in der virtuellen Realität wieder. Während es für ein Training einer gesamten Schiffsbesatzung vorteilhaft ist, das gesamte Schiff in der virtuellen Realität abzubilden, gibt es auch Trainingsszenarien, wo dieses nicht notwendig ist. Soll beispielsweise ein Flugdeckoffizier trainiert werden, so kann es beispielsweise ausreichen lediglich Flugdeck und Hangar in der virtuellen Welt zu simulieren, da sich der Flugdeckoffizier während des zu trainierenden Einsatzes ausschließlich in diesem Bereich aufhalten wird. Ebenso können auch Teilbereiche in der Simulation in der virtuellen Realität ausgelassen werden, bei denen eine Einbeziehung in das Training der Crew über die virtuelle Realität nicht erfolgt. Beispielsweise ist der Batterieraum in einem Unterseeboot extrem eng, schwer zugänglich und praktisch nur liegend erreichbar. Es kann daher möglich sein, auf die Simulation solcher Räume, beispielsweise des Batterieraums zu verzichten, wenn diese für keine geplanten Trainings benötigt werden.

In einer weiteren Ausführungsform der Erfindung wird neben der Position der ersten Person im Schiff auch die Orientierung der ersten Person erfasst. Wird die Position der ersten Person im Schiff optisch über die erste Datenbrille erfasst, also über das, was die erste Person real vor sich sieht, so ist diese Erfassung vergleichsweise einfach. Auch kann die optische Erfassung mit anderen Lokalisierungsmethoden kombiniert werden, wobei die andere Lokalisierungsmethode zur Bestimmung der Position und die optisch erfassten Daten zur Bestimmung der Orientierung verwendet werden.

In einer weiteren Ausführungsform der Erfindung kann die erste Person ein virtuelles Betätigungselement nur bedienen, wenn die erste Person sich in der Nähe des dem virtuelle Betätigungselement entsprechenden realen Betätigungselements aufhält und eine Orientierung aufweist, sodass die Blickrichtung der ersten Person auf das reale Betätigungselement gerichtet ist.

Erfindungsgemäß wird die virtuelle Realität aus den CAD Daten des Schiffes sowie aus Fotos des Schiffes gebildet. Gerade in Schiffen mit extrem hoher Integrationsdichte, wie beispielsweise militärischen Unterseebooten, führen die kleinen Abweichungen innerhalb eines Loses einer Schiffsklasse dazu, dass Element gegebenfalls an verschiedenen Ort auf den verschiedenen Schiffen angeordnet sind. Um einen guten Trainingserfolg zu gewährleisten und eine Übereinstimmung zwischen der virtuellen Realität und dem realen Schiff zu ermöglichen, ist es daher wichtig, eine möglichst gute Abbildung des Schiffes in der virtuellen Realität zu ermöglichen. CAD Daten und Fotos sind hierfür gut maschinell verarbeitbare Grundlagen und werden daher bevorzugt verwendet.

In einer weiteren Ausführungsform der Erfindung wird ein Simulator mit einem physischen ersten Simulationsraum, welcher einen ersten Bereich des Schiffes dinglich nachbildet, ausgewählt.

Der Simulator dient zur Simulation eines Schiffes. Der Simulator weist in einer weiteren Ausführungsform der Erfindung wenigstens einen ersten Simulationsraum auf, wobei der erste Simulationsraum einen ersten Bereich eines Schiffes dinglich nachbildet. Beispielsweise ist der erste Bereich der Kontrollraum, die sogenannte Brücke, des Schiffs. Der Simulator weist weiter eine Vorrichtung zur Erzeugung und Darstellung einer virtuellen Realität auf, wobei die virtuelle Realität wenigstens die nicht im Simulationsraum dinglich nachgebildeten Bereiche, beispielsweise und insbesondere Räume und Gegenstände eines Schiffs virtuell nachbildet, soweit sie bei einem Schiff für die Besatzung zugänglich sind. Räume und Gegenstände, welche keine Bedeutung für eine Simulation haben, können zur Vereinfachung weggelassen werden, beispielsweise Gegenstände, welche beispielsweise nur der Verpflegung an Bord dienen. Hierdurch wird es möglich den im ersten Simulationsraum vorhandenen ersten Bereich zu ergänzen und so das gesamte Schiff der Simulation und damit dem Training zur Verfügung zu stellen. Der wenigstens eine erste Simulationsraum weist wenigstens eine erste Zugangsvorrichtung zum Eintritt in die virtuelle Realität auf. Durch diese erste Zugangsvorrichtung ist es einer zu trainierenden Person während der Simulation möglich den ersten Bereich, welcher im ersten Simulationsraum wiedergegeben ist, zu virtuell verlassen und andere Bereiche des Schiffs virtuell zu betreten. Hierdurch können Handlungen in allen Bereichen vorgenommen werden. Eine Simulation ist somit nicht nur auf einen räumlich beschränkten Bereich begrenzt. Gegenüber einer vollständigen Simulation in einer virtuellen Realität führt die Verwendung eines ersten Simulationsraums mit realen Bauteilen eine starke Verbesserung des Trainings aufgrund einer besseren praktischen Erfahrung der zu trainierende Person zu wesentlich verbesserten Trainingsergebnissen.

Unter virtueller Realität im Sinne der Erfindung wird ein dreidimensionales berechnetes Model verstanden, welches zum einen die Umgebung, das Innere des Schiffs, wiedergibt. Zum anderen umfasst die virtuelle Realität auch die Möglichkeit mit dieser Umgebung zu interagieren, beispielsweise Schaltelemente zu bedienen, Hydraulikleitungen zu öffnen oder zu schließen, mechanische Vorrichtungen zu betätigen. Des Weiteren umfasst die virtuelle Realität die Berechnung der Auswirkungen dieser Interaktionen gegebenenfalls zuzüglich äußerer Einflussgrößen, welche durch das in der Simulation gegebene Szenario vorgegeben werden, beispielsweise simulierte Systemausfälle, Beschädigungen und dergleichen.

Eine Zugangsvorrichtung zum Eintritt in die virtuelle Realität im Sinne der Erfindung dient zur Darstellung der in der virtuellen Realität erzeugten Bereiche des Schiffes und verfügt über Eingabevorrichtung zur Manipulation. Beispielsweise kann die Darstellung der virtuellen Realität über einen Bildschirm oder eine entsprechende Brille erfolgen. Die Eingabe zur Manipulation kann beispielsweise per Tastatur, Maus oder auch Gestenerkennung erfolgen. Eine Zugangsvorrichtung umfasst daher wenigstens eine Wiedergabevorrichtung und wenigstens eine Eingabevorrichtung. Besonders bevorzugt weist eine Zugangsvorrichtung zusätzlich eine akustische Kommunikationsvorrichtung auf, beispielsweise und insbesondere bestehend aus einem Mikrophon und Kopfhörern.

Unter Eintritt in die virtuelle Realität im Sinne der Erfindung wird das Benutzen der Zugangsvorrichtung verstanden. Im einfachsten Fall kann der Eintritt in die virtuelle Realität beispielsweise durch das Aufsetzen einer entsprechenden Brille und dem Aufsetzen eines entsprechenden Headsets erfolgen.

In einer weiteren Ausführungsform der Erfindung weist der Simulator wenigstens einen ersten Schulungsraum auf, wobei der wenigstens eine erste Schulungsraum wenigstens eine zweite Zugangsvorrichtung zum Eintritt in die virtuelle Realität aufweist. Auf diese Weise ist es möglich, dass sowohl Personen im ersten Simulationsraum trainiert werden als auch Personen, welche sich ausschließlich in den Bereichen bewegen, welche mittels virtueller Realität abgebildet werden. Hierdurch ist es insbesondere möglich die gesamte Schiffscrew gleichzeitig zu trainieren.

In einer weiteren Ausführungsform der Erfindung weist der Simulator erste Eingabemittel in dem wenigstens einen ersten Simulationsraum auf. Der Simulator weist zweite Eingabemittel in der virtuellen Realität auf. Eingabemittel im Sinne der Erfindung umfassen alle Möglichkeiten der Interaktion einer Person mit einem Schiff. Hierbei kann es sich um beispielsweise aber nicht beschränkt auf Computerkonsolen, Hebel, Ventile, Schalter und dergleichen handeln. Beispielsweise kann die Trimmung über die entsprechenden Eingabemittel an einer Computerkonsole des Schiff-Automationssystems im ersten Simulationsraum erfolgen aber genauso auch über Handtrimmpumpen. Dieses dient beispielsweise dem Einüben des Verhaltens beim Ausfall des primären Systems. Der Simulator verwendet Eingaben über die ersten Eingabemittel und Eingaben über die zweiten Eingabemittel zur Simulation des wenigstens einen ersten Simulationsraums. Ebenso verwendet der Simulator Eingaben über die ersten Eingabemittel und Eingaben über die zweiten Eingabemittel zur Simulation der virtuellen Realität. Gerade das oben genannte Beispiel bezüglich der Trimmung zeigt, dass lediglich in der Verwendung der Eingaben über erste Eingabemittel und zweite Eingabemittel eine vollständige Simulation im Simulator möglich ist.

Erste Eingabemittel umfassen insbesondere Schalt- und Steuertafeln, wie diese in realen Schiffen zum Einsatz kommen. Beispielsweise und insbesondere ist der Kontrollraum mit echten, auch für den Einsatz in einem realen Schiff geeigneten Einrichtungen ausgestattet. Die Eingabe erfolgt somit exakt identisch zur Eingabe in einem Schiff, wodurch das Trainingsergebnis verbessert wird.

Zweite Eingabemittel sind die in der virtuellen Realität abgebildete Vorrichtungen, beispielsweise Schalttafel, Ventile, Hebel, Klappen, Türen, Computer und dergleichen. Prinzipiell umfassen die zweiten Eingabemittel alles, was in einem Schiff durch die Besatzung manipuliert werden kann. Hierbei kann zur Vereinfachung der Simulation eine Auswahl getroffen werden, welche Eingabemittel nicht darstellt, welche keinen Einfluss auf das Bootsverhalten haben.

Eingabevorrichtungen umfassen Tastatur, Maus, Gestenerkennung, Spracherkennung, Motion-Capturing und dergleichen.

In einer weiteren Ausführungsform der Erfindung ist die virtuelle Realität derart ausgebildet, dass die Auswahl eines zweiten Eingabemittels zweistufig erfolgt, wobei eine Person zunächst einen Bereich mit mehreren zweiten Eingabemitteln auswählt, wobei der Simulator die ausgewählten mehreren zweiten Eingabemittel vergrößert darstellt, wobei die Person anschließend ein bestimmtes zweites Eingabemittel auswählen kann. Dieses ist besonders vorteilhaft, wenn in dem Bereich mehrere zweite Eingabemittel dicht beieinanderliegen oder diese zweiten Eingabemittel auch hintereinander angeordnet sein können. Dieses entspricht auch dem natürlichen Verhalten einer Person, welche einen Bereich, in welchem sie arbeiten möchte, zunächst auswählt und sich dann auf diesen auch in ihrer Wahrnehmung fokussiert. Dieses kann beispielsweise das Öffnen einer Klappe oder ein Bücken der Person zu einem Ventil hin beinhalten.

In einer weiteren Ausführungsform der Erfindung ist der Simulator zum gleichzeitigen Training einer Mehrzahl an Personen ausgebildet. Der Simulator weist Kommunikationsmittel auf. Die Kommunikationsmittel sind so gestaltet, dass eine Person nur mit einer anderen Person über die Kommunikationsmittel kommunizieren kann, sofern dieses auch im Schiff möglich ist. Beispielsweise können Personen, welche sich im ersten Simulationsraum befinden, direkt miteinander reden. Personen, welche sich in verschiedenen Räumen des Schiffs in der virtuellen Realität befinden, können nur, beispielsweise über ein Headset, miteinander reden, wenn diese beispielsweise eine Gegensprechanlage, beispielsweise im ersten Simulationsraum beziehungsweise in der virtuellen Realität, verwenden oder sich gemeinsam in Räumen ohne Trennung durch Türen oder Schotten, insbesondere virtuelle geschlossene schalldichte Türen oder Schotten, befinden, wobei der Abstand den normalen möglichen Kommunikationsabstand in einem Schiff nicht überschreitet. Dieses unterscheidet einen solchen Simulator grundlegend von üblichen Anwendungen der virtuellen Realität, bei welcher üblicherweise alle Teilnehmer ständig miteinander kommunizieren können. Eine solche Kommunikationsmöglichkeit würde jedoch eine nicht lebensnahe Trainingssituation darstellen, was das Trainingsergebnis im Simulator verschlechtern würde.

In einer weiteren Ausführungsform der Erfindung erlauben die Kommunikationsmittel eine Kommunikation, sofern die beteiligten Personen sich im gleichen virtuellen Raum befinden oder ein virtuelles Kommunikationsmittel, beispielsweise eine Gegensprechanlage, verwenden.

In einer weiteren Ausführungsform der Erfindung ist der wenigstens eine erste Simulationsraum bewegbar gelagert. Insbesondere kann der erste Simulationsraum entsprechend der simulierten Lage des Schiffs im Raum geneigt und/oder gekippt werden.

In einer weiteren Ausführungsform der Erfindung ist der Simulator zur Wiedergabe von am Training beteiligten Personen in Form von Avataren in der virtuellen Realität ausgebildet. Ein Avatar muss hierbei nicht eine bestimmte Person, insbesondere nicht das Aussehen der repräsentierten Person, wiedergeben. Zur Vereinfachung wird vorzugsweise mit generischen Avataren gearbeitet. Aufgrund der räumlichen Enge in einem Schiff ist gerade die Interaktion zwischen beteiligten Personen sehr wichtig. Damit eine Person schnell zu einem Ort einer Handlung gelangen kann ist regelmäßig das Passieren weiterer Personen notwendig. Um somit ein gutes Trainingsergebnis zu erreichen, ist die Simulation aller beteiligten Personen, welche sich in der virtuellen Realität befinden, zweckdienlich.

In einer weiteren Ausführungsform der Erfindung weist der Simulator wenigstens erste Programmelemente und zweite Programmelemente auf. Die ersten Programmelemente dienen zur Berechnung des Verhaltens des Schiffs. Beispielsweise dienen die ersten Programmelemente der Berechnung der Lage des Schiffs im Raum abhängig von der Trimmlage. Die zweiten Programmelemente dienen der Simulation der Steuerung des Schiffs mittels der eingebauten Komponenten. Besonders bevorzugt handelt es sich bei den zweiten Programmelementen um die Programmelemente, welche auch im Schiff selbst Verwendung finden. Beispielsweise dienen zweite Programmelemente zur Ansteuerung der Trimmpumpen nach Eingabe entsprechender Eingabewerte über eine Dateneingabestation.

In einer weiteren Ausführungsform der Erfindung weist der Simulator einen Kontrollraum auf. Der Kontrollraum weist Steuereingabemittel auf, wobei die Steuereingabemittel zum Eingriff in die Simulation ausgebildet sind. Beispielsweise können über Steuereingabemittel der Ausfall einzelner Stationen oder auch ein Wassereinbruch simuliert werden. Hierdurch können auch nicht übliche Betriebszustände leicht dargestellt werden.

In einer weiteren Ausführungsform der Erfindung weist der Simulator wenigstens einen zweiten Schulungsraum auf, wobei der wenigstens eine zweite Schulungsraum Vorrichtungen dinglich enthält, welche sich in einem Schiff üblicherweise im dem im Simulator nur in der virtuellen Realität befinden. Der zweite Schulungsraum dient dazu, den händischen Umgang mit solchen Vorrichtungen zu trainieren. Bei den Vorrichtungen kann es sich beispielsweise um Verbindungen handeln, welche beispielsweise auseinander oder zusammengeschraubt werden müssen. Hierbei geht es um das konkrete händische Training an diesen Vorrichtungen, um die konkreten Handgriffe durch praktisches Tun einfach und effizient zu trainieren.

In einer weiteren Ausführungsform der Erfindung werden die Computersysteme des Schiffes in einen Trainingsmodus geschaltet, wodurch alle Eingaben, welche in das Computersystem des Schiffes gemacht werden, keine Effekte im Schiff haben, sondern die durch die Eingaben erzeugten Effekte in der virtuellen Realität wiedergegeben werden. Hierzu wird eine Verbindung zwischen den Computersystemen des Schiffes und dem Simulator geschaffen.

In einer weiteren Ausführungsform der Erfindung wird als zweite Person ein Trainer ausgewählt. Trainer sind üblicherweise Personen mit sehr hoher Qualifikationen. Gerade deren Reisezeit ist damit vergleichsweise teuer. Lediglich virtuell an Bord des Schiffes zu gehen, um dort Personen zu trainieren ist somit sehr effizient.

Nachfolgend ist das erfindungsgemäße Verfahren anhand eines in den Zeichnungen dargestellten Ausführungsbeispiels näher erläutert.
Fig. 1 Schiff und Simulator
Fig. 2 sichtbare Avatare
Fig. 3 mit Computersystem des Schiffs

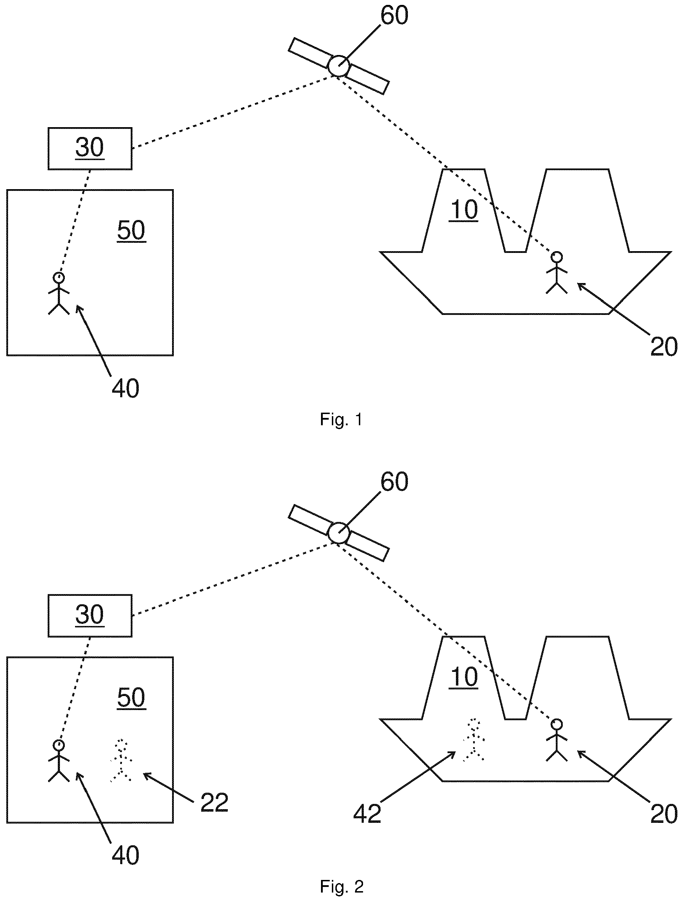

In Fig. 1 zeigt ein erstes Beispiel der Schulung. Auf einem Schiff 10 befindet sich eine erste Person 20. Diese trägt eine erste Datenbrille, die hier zur Vereinfachung nicht eingezeichnet ist. In einem Raum 50 befindet sich eine zweite Person 40. Dieser Raum 50 und die Person 40 befinden sich an einem ganz anderen Ort als das Schiff 10. In einem Simulator 30 wird eine virtuelle Realität des Schiffes 10 erzeugt. Beispielhaft trägt die zweite Person 40 eine VR-Brille, um die virtuelle Realität des Simulators 30 zu sehen und mit dieser interagieren zu können. Dieses ist durch die gestrichelte Datenverbindung zwischen dem Simulator 30 und der zweiten Person 40, eigentlich zu der nicht gezeigten VR-Brille der zweiten Person 40, angedeutet. Ebenso besteht eine Datenverbindung zwischen dem Simulator 30 und der ersten Person 20, besser gesagt zu der nicht gezeigten ersten Datenbrille der ersten Person 20. Dieses ist ebenfalls über die gestrichelte Linie angedeutet. Diese wird beispielhaft über einen Satelliten 60 geleitet, was lediglich zur Verdeutlichung der Entfernung gezeigt ist. Natürlich kann auch eine kabelgebundene Lösung oder das Internet verwendet werden. Hierdurch kann die erste Person 20 beispielsweise den zweiten Avatar 42 der zweiten Person und die zweite Person 40 den ersten Avatar der ersten Person 20 sehen, wie in Fig. 2 angedeutet.

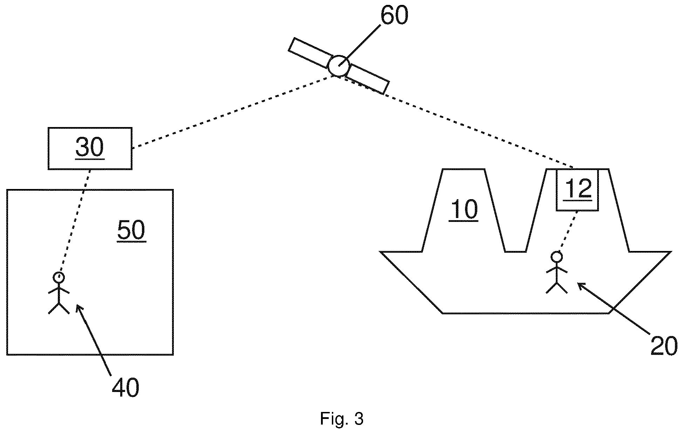

In Fig. 3 ist ergänzend gezeigt, dass das Schiff ein Computersystem 12 aufweist. Dieses ist in den Trainingsmodus geschaltet. Alle Eingaben der ersten Person 20 werden nicht wie üblich ausgeführt, sondern per Datenverbindung an den Simulator 30 übertragen und beeinflussen nur die virtuelle Realität. Zur Vereinfachung übernimmt das Computersystem 12 die Datenverbindung zur (nicht gezeigten) ersten Datenbrille der ersten Person.

### Bezugszeichen

- 10: Schiff
- 12: Computersystem
- 20: erste Person
- 22: erster Avatar
- 30: Simulator
- 40: zweite Person
- 42: zweiter Avatar
- 50: Raum
- 60: Satellit

## Patentansprüche

1. Verfahren zum Training einer Schiffsbesatzung, wobei zum Training zum Ersten das Schiff (10) verwendet wird, wobei die Schiffsbesatzung auf die Verwendung des Schiffes (10) für den realen Einsatz trainiert werden soll, wobei zum Zweiten ein Simulator (30) verwendet wird, wobei der Simulator (30) zur Erzeugung einer virtuellen Realität des verwendeten Schiffes (10) ausgebildet ist, wobei sich das Schiff (10) an einem ersten Ort und der Simulator (30) an einem zweiten Ort befinden, wobei der erste Ort von dem zweiten Ort verschieden ist, wobei eine erste datentechnische Übertragungsverbindung zwischen dem Simulator (30) und dem Schiff (10) besteht, wobei wenigstens eine erste Person (20) an Bord des Schiffes (10) trainiert, wobei wenigstens eine zweite Person (40) im Simulator (30) trainiert, wobei die erste Person (20) eine erste Datenbrille verwendet, wobei eine Datenverbindung zwischen der ersten Datenbrille und dem Simulator (30) besteht und Daten zwischen dem Simulator (30) und der ersten Datenbrille derart ausgetauscht werden, dass die erste Person (20) und die zweite Person (40) in der virtuellen Realität wiedergegeben werden, wobei die erste Person (20) Handlungen nicht an realen mechanischen Betätigungselementen des Schiffes (10) vornimmt, sondern an virtuellen Betätigungselementen in der virtuellen Realität vornimmt, wobei der Simulator (30) die Reaktionen des virtuellen Schiffes auf die Handlungen der ersten Person (20) und der zweiten Person (40) simuliert und die Ergebnisse in der virtuellen Realität wiedergibt, **dadurch gekennzeichnet, dass** die Position der ersten Person (20) im Schiff (10) über die erste Datenbrille erfasst wird, wobei die Position der ersten Person (20) im Schiff (10) über die erste Datenbrille durch einen Abgleich der von der ersten Datenbrille optisch erfassten Umgebung mit der virtuellen Realität erfasst wird, indem der Simulator (30) ermittelt, aus welcher Position sich die optisch erfasste Umgebung ergibt, wobei die virtuelle Realität aus den CAD Daten des Schiffes (10) sowie aus Fotos des Schiffes (10) gebildet wird.

2. Verfahren nach Anspruch 1, **dadurch gekennzeichnet, dass** die Position der ersten Person (20) im Schiff (10) über die erste Datenbrille ausgehend von einem Startpunkt erfasst wird.

3. Verfahren nach einem der vorstehenden Ansprüche, **dadurch gekennzeichnet, dass** die Handlungen an den virtuellen Betätigungselementen am Ort der realen Betätigungselemente im realen Schiff (10) vorgenommen werden.

4. Verfahren nach einem der vorstehenden Ansprüche, **dadurch gekennzeichnet, dass** der Simulator (30) nur einen Teil des verwendeten Schiffes (10) in der virtuellen Realität wiedergibt.

5. Verfahren nach einem der vorstehenden Ansprüche, **dadurch gekennzeichnet, dass** neben der Position der ersten Person (20) im Schiff (10) auch die Orientierung der ersten Person (20) erfasst wird.

6. Verfahren nach einem der vorstehenden Ansprüche, **dadurch gekennzeichnet, dass** ein Simulator (30) mit einem physischen ersten Simulationsraum, welcher einen ersten Bereich des Schiffes (10) dinglich nachbildet, ausgewählt wird.

7. Verfahren nach einem der vorstehenden Ansprüche, **dadurch gekennzeichnet, dass** die Computersysteme (12) des Schiffes (10) in einen Trainingsmodus geschaltet werden, wodurch alle Eingaben, welche in das Computersystem (12) des Schiffes (10) gemacht werden, keine Effekte im Schiff (10) haben, sondern die durch die Eingaben erzeugten Effekte in der virtuellen Realität widergegeben werden.

## Claims

1. Method for training a ship's crew, wherein, for training, firstly, the ship (10) is used, wherein the ship's crew is to be trained in the use of the ship (10) for real-life operations, wherein, secondly, a simulator (30) is used, wherein the simulator (30) is designed to generate a virtual reality of the ship (10) being used, wherein the ship (10) is located at a first location and the simulator (30) is located at a second location, wherein the first location is different from the second location, wherein a first data transmission link exists between the simulator (30) and the ship (10), wherein at least one first person (20) trains on board the ship (10), wherein at least one second person (40) trains in the simulator (30), wherein the first person (20) uses first data glasses, wherein a data connection exists between the first data glasses and the simulator (30), and data is exchanged between the simulator (30) and the first data glasses in such a way that the first person (20) and the second person (40) are reproduced in virtual reality, wherein the first person (20) does not perform actions on real mechanical operating elements of the ship (10), but rather on virtual operating elements in virtual reality, wherein the simulator (30) simulates the reactions of the virtual ship to the actions of the first person (20) and the second person (40) and reproduces the results in virtual reality, **characterised in that** the position of the first person (20) in the ship (10) is detected via the first data glasses, wherein the position of the first person (20) in the ship (10) is detected via the first data glasses by comparing the environment optically detected by the first data glasses with the virtual reality, **in that** the simulator (30) determines the position from which the optically detected environment results, wherein the virtual reality is formed from the CAD data of the ship (10) and from photos of the ship (10).

2. Method according to claim 1, **characterised in that** the position of the first person (20) in the ship (10) is detected via the first data glasses starting from a starting point.

3. Method according to one of the preceding claims, **characterised in that** the actions on the virtual operating elements are performed at the location of the real operating elements in the real ship (10).

4. Method according to one of the preceding claims, **characterised in that** the simulator (30) reproduces only part of the ship (10) used in virtual reality.

5. Method according to one of the preceding claims, **characterised in that,** in addition to the position of the first person (20) in the ship (10), the orientation of the first person (20) is also recorded.

6. Method according to one of the preceding claims, **characterised in that** a simulator (30) with a physical first simulation room, which physically replicates a first area of the ship (10), is selected.

7. Method according to one of the preceding claims, **characterised in that** the computer systems (12) of the ship (10) are switched to a training mode, whereby all inputs made into the computer system (12) of the ship (10) have no effect in the ship (10), but the effects generated by the inputs are reproduced in virtual reality.

## Revendications

1. Méthode de formation de l'équipage d'un navire, dans laquelle, pour la formation, on utilise d'abord le navire (10), l'équipage du navire devant être formé à l'utilisation du navire (10) pour des opérations réelles, puis un simulateur (30) est utilisé, dans lequel le simulateur (30) est conçu pour générer une réalité virtuelle du navire (10) utilisé, dans lequel le navire (10) est situé à un premier emplacement et le simulateur (30) est situé à un deuxième emplacement, dans lequel le premier emplacement est différent du deuxième emplacement, dans lequel une première liaison de transmission de données existe entre le simulateur (30) et le navire (10), dans lequel au moins une première personne (20) s'entraîne à bord du navire (10), dans lequel au moins une deuxième personne (40) s'entraîne dans le simulateur (30), dans lequel la première personne (20) utilise des premières lunettes de données, dans lequel une connexion de données existe entre les premières lunettes de données et le simulateur (30), et des données sont échangées entre le simulateur (30) et les premières lunettes de données de telle sorte que la première personne (20) et la deuxième personne (40) sont reproduites dans la réalité virtuelle, dans lequel la première personne (20) n'effectue pas d'actions sur des éléments de commande mécaniques réels du navire (10), mais plutôt sur des éléments de commande virtuels dans la réalité virtuelle, le simulateur (30) simulant les réactions du navire virtuel aux actions de la première personne (20) et de la deuxième personne (40) et reproduisant les résultats dans la réalité virtuelle, **caractérisé en ce que** la position de la première personne (20) dans le navire (10) est détectée via les premières lunettes de données, la position de la première personne (20) dans le navire (10) est détectée via les premières lunettes de données en comparant l'environnement détecté optiquement par les premières lunettes de données avec la réalité virtuelle, **en ce que** le simulateur (30) détermine la position à partir de laquelle résulte l'environnement détecté optiquement, la réalité virtuelle étant formée à partir des données CAO du navire (10) et à partir de photos du navire (10).

2. Procédé selon la revendication 1, **caractérisé en ce que** la position de la première personne (20) dans le navire (10) est détectée via les premières lunettes de données à partir d'un point de départ.

3. Procédé selon l'une des revendications précédentes, **caractérisé en ce que** les actions sur les éléments de commande virtuels sont effectuées à l'emplacement des éléments de commande réels dans le navire réel (10).

4. Procédé selon l'une des revendications précédentes, **caractérisé en ce que** le simulateur (30) ne reproduit qu'une partie du navire (10) utilisée dans la réalité virtuelle.

5. Procédé selon l'une des revendications précédentes, **caractérisé en ce que,** outre la position de la première personne (20) dans le navire (10), l'orientation de la première personne (20) est également enregistrée.

6. Procédé selon l'une des revendications précédentes, **caractérisé en ce qu'**un simulateur (30) avec une première salle de simulation physique, qui reproduit physiquement une première zone du navire (10), est sélectionné.

7. Procédé selon l'une des revendications précédentes, **caractérisé en ce que** les systèmes informatiques (12) du navire (10) sont commutés en mode formation, de sorte que toutes les entrées effectuées dans le système informatique (12) du navire (10) n'ont aucun effet sur le navire (10), mais que les effets générés par les entrées sont reproduits en réalité virtuelle.
